Europäisches Patentamt

European Patent Office

Office européen des brevets

(11) Veröffentlichungsnummer: **0 604 672 A1**

# (12) EUROPÄISCHE PATENTANMELDUNG

(21) Anmeldenummer: 92121841.8

(51) Int. Cl.5: **B25J 9/16**, G05B 19/19

(22) Anmeldetag: 23.12.92

(43) Veröffentlichungstag der Anmeldung:
**06.07.94 Patentblatt 94/27**

(84) Benannte Vertragsstaaten:
**AT BE CH DE DK ES FR GB GR IE IT LI LU MC NL PT SE**

(71) Anmelder: **SIEMENS AKTIENGESELLSCHAFT**
**Wittelsbacherplatz 2**
**D-80333 München(DE)**

(72) Erfinder: **Olomski, Jürgen, Dr.-Ing.**
**v.-Andechs-Weg 24**
**W-8522 Herzogenaurach(DE)**
Erfinder: **Brandmähl-Estor, Gerd, Dipl.-Ing.**
**Grabenäckerstrasse 1**
**W-8551 Hemhofen(DE)**

(54) **Verfahren zur Drehmomentvorsteuerung von numerisch geregelten, verkoppelten Antriebssystemen.**

(57) Bei dem Verfahren zur Drehmomentvorsteuerung von numerisch geregelten, verkoppelten Antriebssystemen($A_i$), werden die Beschleunigungsmomente ($m_{bi}$) für jede Achse aus den Eigen- und Koppelträgheitsmomenten ($\underline{J}$) im Drehmomentberechnungstakt bestimmt und die Änderungen der Eigen- und Koppelträgheitsmomente ($\underline{J}$) in einem langsameren Takt nachgeführt.

FIG 1

Die Verzögerung von positionsgeregelten Antriebssystemen von Werkzeugmaschinen oder Robotern mit Standard-Lageregelung aus kaskadiertem Strom-, Drehzahl- und Lageregelkreis führt zu einem Schleppabstand und damit verbunden zu einer Konturabweichung. Durch Vorsteuerung von Drehzahl und Drehmoment kann diese Verzögerung nahezu vollständig aufgehoben und eine deutlich bessere Konturgenauigkeit erzielt werden. Die Drehmomentberechnung von verkoppelten Antriebssystemen, insbesondere bei Industrierobotern, ist sehr aufwendig und kann in Echtzeit nicht mit einem vertretbaren Aufwand durchgeführt werden.

Eine Drehmomentvorsteuerung die das Eigenträgheitsmoment berücksichtigt ist beispielsweise in der europäischen Patentanmeldung 04 98 903 beschrieben. Der notwendige Rechenzeitbedarf verhindert bisher jedoch die Anwendung der Drehmomentvorsteuerung unter Einbeziehung der Eigen- und Koppelträgheitsmomente.

Aufgabe der Erfindung ist es, ein Verfahren zur Drehmomentvorsteuerung von numerisch geregelten Antriebssystemen zu erhalten, das für Echtzeitanwendungen geeignet ist.

Diese Aufgabe wird dadurch gelöst, daß die für die Drehmomentberechnung benötigten Eigen- und Koppelträgheitsmomente in einem langsameren Takt als dem eigentlichen Drehmomentberechnungstakt nachgeführt werden.

Nach einer vorteilhaften Ausbildung der Erfindung läßt sich der Rechenaufwand weiter verringern, wenn nur für die Hauptantriebssysteme, d.h. nur für die Systeme, die wesentlich zur Änderung der Trägheitsmoente beitragen, ein umfaßendes verkoppeltes Modell verwendet wird und für die übrigen Systeme (Handachsen) jeweils nur einfache einachsige Modelle.

Bei dem Verfahren kann das inverse Modell, daß die Bewegungsgleichungen des Roboters berechnet, zentral für alle Antriebssysteme verwendet werden.

Im Sinne der vorliegenden Erfindung ist unter Antriebssystem ein System zu verstehen, daß aus einem Aktuator, z.B. einem Elektromotor, aus Koppelelementen und aus der angetriebenen Last, beispielsweise Werkzeugmaschinen- oder Roboterachsen und zusätzliche Lasten an diesen Achsen, besteht. Das Antriebssystem kann Mittel zur Regelung und/oder Steuerung aufweisen.

Ein Ausführungsbeispiel der Erfindung wird im folgenden anhand der Zeichnung näher erläutert. Dabei zeigen:

FIG 1      das Blockschaltbild eines Regelkreises für ein Antriebssystem mit Drehmomentvorsteuerung,

FIG 2      das inverse Modell zur Berechnung der Drehmomente für alle Achsen.

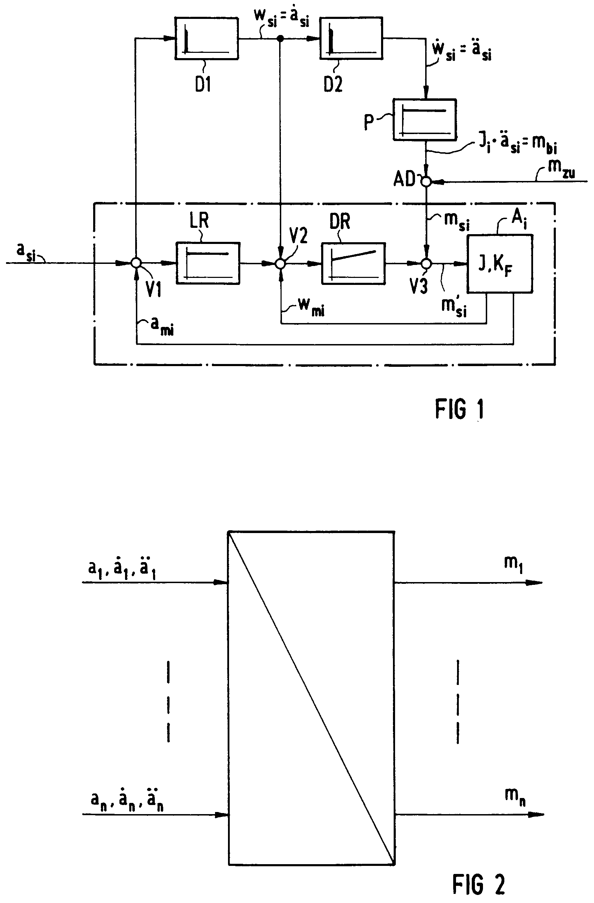

FIG 1 zeigt eine Regelstrecke (gestrichelt umrandet) für ein Achsantriebssystem, auf die ein Antriebssollwert als Lagesollwert $a_{si}$ aufgeschaltet wird. Die Hauptbestandteile der Regelstrecke sind ein Lageregler LR, ein Drehzahlregler DR, der als PI-Glied ausgebildet sein kann, sowie eine Antriebseinheit $A_i$, der ein Drehmomentsollwert $m'_{si}$ zugeführt wird. Die Antriebseinheit $A_i$ verfügt über einen Leistungsteil, über den der Drehmomentsollwert $m'_{si}$ zum Antrieb eines Motors und einer mit diesem verbundenen Last (Antriebssystem) umgesetzt wird. Das Leistungsteil, der Motor und die Last sind der Übersichtlichkeit halber nicht dargestellt. Die Last (inklusive alle zum Antriebssystem gehörenden Teile) wird durch ein Massenträgheitsmoment J repräsentiert. Vom Antriebssystem $A_i$ wird der motorseitige Antriebsistwert $a_{mi}$ sowie der motorseitige Drehzahlistwert $w_{mi}$ zur Regelung an den Lageregler LR bzw. den Drehzahlregler DR zurückgeführt.

Parallel zum Lageregler LR und Drehzahlregler DR sind in Serie ein erstes und ein zweites Differenzierglied D1, D2 sowie ein Proportionalregelglied P angeordnet, die zur Drehzahl- bzw. Drehmomentvorsteuerung benötigt werden.

Zur Drehzahlvorsteuerung wird der durch das Differenzierglied D1 einmal differenzierte Lagesollwert $a_{si}$ als Solldrehzahl $w_{si}$ zum Ausgangssignal des Lagereglers LR addiert. Zur Drehmomentvorsteuerung wird der durch das erste und zweite Differenzierglied D3, D4 zweimal differenzierte Lagesollwert $a_{sl}$ über ein Proportionalglied P zum Ausgang des Drehzahlreglers DR addiert. Weitere Drehmomentanteile, wie die Koppelträgheitsmomente, Reibungs- oder Gravitationsmomente werden als zusätzliche Momente $m_{zu}$ über das Addierglied AD aufgeschaltet. Durch das direkte Aufschalten des Drehzahlsollwertes $w_{si}$ und des Drehmomentsollwertes $m_{si}$ wird eine hohe Dynamik des Anlaufverhaltens des Motors erreicht und dadurch der bei Regelstrecken auftretende Schleppabstand weitgehend minimiert.

FIG 1 zeigt das Prinzip der Drehmomentvorsteuerung für nur eine Achse bzw. ein Antriebssystem. Bei mehreren Achsen bzw. Antriebssystemen, die miteinander verkoppelt sind, muß für jede dieser Achsen der Drehmomentsollwert $m_{si}$ berechnet werden. Der Drehmomentsollwert $m_{si}$ hängt dabei im wesentlichen von den Beschleunigungsmomenten den Coriolis- und Zentrifugalmomenten den Gravitationsmomenten und den Reibungsmomenten gemäß Gleichung (1) ab.

$$\underline{m} \;=\; \underline{J}(\underline{a}) \cdot \underline{\ddot{a}} \;+\; \underline{c}\,(\underline{a},\underline{\dot{a}}) \;+\; \underline{g}\,(\underline{a}) \;+\; \underline{r}(\underline{\dot{a}}) \qquad (1)$$

Die Unterstreichungen kennzeichen die jeweiligen Größen als Matrizen bei Großbuchstaben und als Vektoren bei Kleinbuchstaben. Dabei ist $\underline{m}$ der Vektor der Solldrehmomente (auf den Index "s" wird im folgenden der Einfachheit halber verzichtet). $\underline{J}$ die Matrix der Eigen- und Koppelträgheitsmomente, wobei die Elemente der Matrix abhängig sind von der jeweiligen Winkelstellung $\underline{a}$ der Antriebssysteme. $\underline{c}$ ist der Vektor der Coriolis- und Zentrifugalmomente, der im wesentlichen abhängig ist von den Winkelstellungen $\underline{a}$ und den Winkelgeschwindigkeiten $\underline{\dot{a}}$. $\underline{g}$ ist der Vektor der Gravitationsmomente, der im wesentlichen von den Winkelstellungen $\underline{a}$ abhängig ist und $\underline{r}$ der Vektor der Reibungskräfte, der im wesentlichen von den Winkelgeschwindigkeiten $\underline{\dot{a}}$ abhängig ist. $\underline{\dot{a}}$ ist die erste und $\underline{\ddot{a}}$ die zweite Ableitung des Lagesollwerts (Winkelstellung) nach der Zeit, d.h.

$$\underline{\dot{a}} \;=\; da/dt;$$

$\underline{\ddot{a}} = d^2a/dt^2$.

Bei der Berechnung von Gleichung (1) können die Coriolis- und Zentrifugalmomente $\underline{c}$ wegen Geringfügigkeit vernachläßigt werden; die Gravitationsmomente $\underline{g}$ ändern sich nur mit der Lage- bzw. Winkelstellung und können vom Regler einfach nachgeführt werden, so daß sie in Gleichung (1) ebenfalls nicht berücksichtigt zu werden brauchen. Somit verbleiben das Beschleunigungs- und das Reibmoment. Die Reibungsmomente lassen sich im allgemeinen für jede Achse über eine einfache Funktion mit konstantem und geschwindigkeitsproportionalem Anteil berechnen. Den wesentlichen Aufwand bereitet die Ermittlung der Beschleunigungsmomente $\underline{m}_{bi} = \underline{J}(\underline{a}) \cdot \underline{\ddot{a}}$, die nach Gleichung (2) berechnet werden.

$$
\begin{bmatrix}
m_{b1} \\
\cdot \\
\cdot \\
\cdot \\
\cdot \\
\cdot \\
\cdot \\
\cdot \\
\cdot \\
m_{bn}
\end{bmatrix}
=
\begin{bmatrix}
J_{11} & J_{12} & \cdots & J_{1n} \\
 & J_{22} & & \\
 & & \ddots & \\
 & & & \\
 & & & \\
 & & & \\
J_{n1} & & & J_{nn}
\end{bmatrix}
\begin{bmatrix}
\ddot{a}_1 \\
\cdot \\
\cdot \\
\cdot \\
\cdot \\
\cdot \\
\cdot \\
\cdot \\
\cdot \\
\ddot{a}_n
\end{bmatrix}
\qquad (2)
$$

Gleichung (2) stellt den allgemeinen Ansatz zur Berechung der Beschleunigungsmomente von verkoppelten Antriebssystemen, beispielsweise bei einem Roboter mit n-Achsen (wobei i = 1...n) dar.

Die Elemente der Spaltenmatrix der Winkelbeschleunigungen $\underline{\ddot{a}}$ und die Elemente $J_{ii}$ der Trägheitsmatrix ändern sich mit den Lagesollwerten bzw. mit den Winkelstellungen $\underline{a}$ der Antriebssysteme des Roboters im Drehmomentberechnungstakt, der in der Regel mit dem Interpolationstakt der numerischen Steuerung identisch ist. Zur Berechnung der Beschleunigungsdrehmomente müßte also auch die Matrix der Trägheitsmomente $\underline{J}$ in diesem Takt neu berechnet werden. Es zeigt sich aber, daß die Lageänderungen im Drehmomentberechnungstakt nicht so groß sind, daß sich in einem Taktzyklus wesentliche Änderungen der Trägheitsmatrix $\underline{J}$ ergeben. Daher kann die Trägheitsmatrix $\underline{J}$ auch in Vielfachen dieses Taktes neu berechnet werden, so daß genügend Zeit verbleibt, um alle notwendigen neu zu berechnenden Matrixelemente zu ermitteln.

Der Ansatz gemäß Gleichung (2) läßt sich jedoch für reale Modelle wesentlich vereinfachen. So genügt es, für die drei Hauptachsen von gängigen Robotern ein Modell zu erstellen, in dem lediglich die Verkopplungen zwischen diesen Hauptachsen enthalten sind, während für die Handachsen getrennte, nicht gekoppelte Einachs-Modelle mit konstanten Trägheitsmomenten Verwendung finden. Letzteres ist dadurch gerechtfertigt, daß bei den Handachsen im allgemeinen das konstante Motorträgheitsmoment gegenüber dem variablen Gelenkkörperträgheitsmoment dominiert und das von Modellungenauigkeiten verursachte axiale Fehler sich im Konturfehler wegen der geringen geometrischen Abmessungen weniger stark auswirken als Abweichungen der Hauptachsen.

Bei den Hauptachsen sind für einen typischen Gelenkarmroboter lediglich die Koppelbeschleunigungen zwischen der zweiten und dritten Achse von Bedeutung, während Beschleunigungseinflüsse zwischen erster und zweiter bzw. erster und dritter Achse, die bei bestimmten Exzentritäten auftreten können, zu vernachlässigen sind. Der somit stark vereinfachte, aber im allgemeinen hinreichend genaue Ansatz zur Berechnung der Beschleunigungsmomente lautet:

$$
\begin{pmatrix} m_{b1} \\ \cdot \\ \cdot \\ \cdot \\ \cdot \\ m_{bn} \end{pmatrix}
=
\begin{pmatrix}
J_{11} & 0 & 0 & 0 & \cdot & \cdot \\
0 & J_{22} & J_{23} & 0 & \cdot & \cdot \\
0 & J_{32} & J_{33} & 0 & \cdot & \cdot & \cdot \\
0 & 0 & 0 & J_{44} & 0 & \cdot \\
\cdot & \cdot & \cdot & 0 & \cdot & \cdot \\
0 & \cdot & \cdot & 0 & \cdot & J_{nn}
\end{pmatrix}
\begin{pmatrix} \ddot{a}_1 \\ \cdot \\ \cdot \\ \cdot \\ \cdot \\ \ddot{a}_n \end{pmatrix}
\qquad (3)
$$

Mit $J_{11}$, $J_{22}$, $J_{33}$ = $f_{ii}$ (a1, a2, a3); $J_{44}$, ... , $J_{nn}$ = konstant. Mit diesem Ansatz kann die Rechenzeit weiter erheblich reduziert werden.

Für Scara- und Portalroboter ergeben sich noch einfachere Zusammenhänge, da hier die Achsen weniger stark gekoppelt bzw. die kinematischen Beziehungen einfacher sind.

Wie in FIG 2 gezeigt und im folgenden näher ausgeführt wird, können die für die Drehmomentberechnungen notwendigen Schritte zentral für alle Achsen durchgeführt werden.

Die einzelnen Trägheitsmomente $J_{ii}$ = $f_{ii}$ (a1,a2,a3) setzen sich zusammen aus konstanten Termen, die einmalig vorab berechnet werden können und aus Termen, die lageabhängig sind und somit zyklisch zu berechnen sind. Die zyklisch zu berechnenden Terme setzen sich wiederum i.A. aus Termen zusammen, die jeweils in die Berechnung mehrerer Trägheitsmomente $J_{ii}$ eingehen und somit vorzugsweise jeweils nur einmal je Takt zu berechnen sind. So ist beispielsweise der Betrag von $J_{ik}$ identisch mit dem Betrag von $J_{ki}$. Eine vorteilhafte Ausprägung der Erfindung ist es deshalb zur Reduzierung der Rechenzeit die notwendigen Berechnungsschritte - zumindest bezüglich der Trägheitsmomente - zentral für alle Achsen durchzuführen um Doppelberechnungen von Termen zu vermeiden.

**Patentansprüche**

1. Verfahren zur Drehmomentvorsteuerung von numerisch geregelten, verkoppelten Antriebssystemen ($A_i$), wobei die Beschleunigungsmomente ($m_{bi}$) für jede Achse aus den Eigen- und Koppelträgheitsmomenten im Drehmomentberechnungstakt bestimmt werden und die Änderungen der Eigen- und Koppelträgheitsmomente in einem langsameren Takt nachgeführt werden.

2. Verfahren nach Anspruch 1, wobei bei der Drehmomentberechnung lediglich die Eigen- und Koppelträgheitsmomente der Hauptantriebssysteme nachgeführt werden und die Drehmomente (m) der Antriebssysteme ($A_i$) mit geringem Eigen- und Koppelträgheitsmomenten ($\underline{J}$) mit konstantem Trägheitsmoment ($\underline{J}$) berechnet und nachgeführt werden.

3. Verfahren nach einem der vorstehenden Ansprüche, wobei die Berechnungen der Trägheitsmomente für alle Achsen zentral durchgeführt werden.

FIG 1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 334 613 (WESTINGHOUSE ELECTRIC CORP.) <br> * Seite 3, Zeile 20 - Seite 4, Zeile 35; Abbildung 1 * <br> --- | 1-3 | B25J9/16 <br> G05B19/19 |
| X | EP-A-0 196 417 (TOSHIBA K.K.) <br> * das ganze Dokument * <br> --- | 1-3 | |
| X | IECON'89, 15TH ANNUAL CONFERENCE OF IEEE INDUSTRIAL ELECTRONICS SOCIETY <br> Bd. 1, NOVEMBER 6-10, 1989, USA <br> Seiten 257 - 262 , XP000130636 <br> LOUIS-A. DESSAINT ET AL. <br> * Zusammenfassung; Abbildung 6 * <br> * Seite 261, rechte Spalte, Absatz 3 * <br> --- | 1-3 | |
| Y | DE-A-2 656 433 (FRAUNHOFER-GESELLSCHAFT ZUR FÖRDERUNG DER ANGEWANDTEN FORSCHUNG E.V.) <br> * das ganze Dokument * <br> --- | 1-3 | |
| Y | EP-A-0 184 075 (SIEMENS A.G.) <br> * Zusammenfassung * <br> --- | 1-3 | **RECHERCHIERTE SACHGEBIETE (Int. Cl.5)** <br><br> B25J <br> G05B |
| A | DE-A-3 742 686 (NISSAN MOTOR CO., LTD) <br> * Zusammenfassung * <br> --- | 1-3 | |
| A | EP-A-0 426 873 (FANUC LTD.) <br> * Abbildung 1 * <br><br> ----- | 1-3 | |

Der vorliegende Recherchenbericht wurde für alle Patentansprüche erstellt

| Recherchenort | Abschlußdatum der Recherche | Prüfer |
|---|---|---|
| DEN HAAG | 25 JUNI 1993 | MOYLE J.F. |

EPO FORM 1503 03.82 (P0403)